Europäisches Patentamt

European Patent Office

Office européen des brevets

(11) Publication number: 0 344 123
A2

# EUROPEAN PATENT APPLICATION

(21) Application number: 89810386.6

(22) Date of filing: 24.05.89

(51) Int. Cl.⁴: A 23 L 1/32

(30) Priority: 27.05.88 US 199567   27.10.88 US 263668

(43) Date of publication of application:
29.11.89 Bulletin 89/48

(84) Designated Contracting States:
CH DE ES FR GB IT LI SE

(71) Applicant: SANDOZ AG
Lichtstrasse 35
CH-4002 Basel (CH)

(84) Designated Contracting States:
CH ES FR GB IT LI SE

(71) Applicant: SANDOZ-PATENT-GMBH
Humboldtstrasse 3
D-7850 Lörrach (DE)

(84) Designated Contracting States: DE

(72) Inventor: Maly, Eugene R.
10866 101st Place
Maple Grove Minnesota 55369 (US)

Olson, Pauline M.
906 Sudberry Lane
Egan Minnesota 55123 (US)

Yang, Jason H.
2420 Olive Lane
Plymouth Minnesota 55447 (US)

(54) Reduced-yolk egg product.

(57) A reduced-yolk egg product in which up to 90 % of the egg yolk is replaced by a corresponding amount of egg white the product comprising a food gum, e.g., iota carrageenan and having a pH in the range of from 6.35 to 7.8

EP 0 344 123 A2

Description

# REDUCED-YOLK EGG PRODUCT

Eggs constitute one of the major sources of food protein, and are consumed either alone or as an ingredient in other food products. The term egg as used herein is intended to refer to chicken eggs or equivalents thereof. Shelled eggs contain two portions, the yolk and the liquid egg white, the egg yolk containing essentially all of the fat and cholesterol of the egg. Though the egg yolk content of an egg may vary and may constitute up to ca. 39 % by weight of a whole shelled egg, it will in general constitute ca. 30 % by weight of a whole shelled egg. The term whole egg as used hereinafter is intended to relate to a whole shelled egg, containing ca. 23.5 to 25 % by weight egg solids and ca. 75 to 76.5 % by weight water. Whole egg contains ca. 12 % by weight protein, ca. 11 % by weight fat and ca. 0.4 to 0.5 % by weight cholesterol. The term egg white as used hereinafter is intended to relate to the product having the composition of the liquid egg white naturally occurring in eggs and comprising ca. 11 to 12 % by weight of egg solids. Egg white contains ca. 10 % by weight of protein, only traces of fat and no cholesterol.

The term egg yolk as used hereinafter is intended to relate to the product having the composition of the egg yolk in eggs and comprising ca. 45 % by weight of egg solids. Egg yolk contains ca. 14 % by weight proteins, ca. 30 % fat and ca. 2 % cholesterol.

It will be appreciated that since whole eggs, egg white and egg yolk are natural products, their composition will be subject to certain variations.

Public awareness of the beneficial effects of a reduced cholesterol diet - due to the correlation of blood cholesterol to coronary disease - has provided an incentive to reduce the cholesterol content of egg products.

Most prior art efforts at reducing egg cholesterol have focused on substitutions for the egg yolk. The substitutions have not found public acceptance, since they substantially alter the taste and texture of the substituted egg product from that of the whole egg.

There is therefore a need for an egg product with reduced cholesterol levels having the taste and texture of the whole egg.

This invention provides an egg product having a reduced-yolk formulation in which up to 90 %, e.g. up to 75 % by weight of the egg yolk of the whole egg is replaced with a corresponding amount, by weight, of egg white and comprising food gum, e.g., iota carrageenan.

The most important characteristic of a cooked egg product is its texture. Cooked eggs within the meaning of this invention are scrambled eggs. Scrambled eggs prepared from whole eggs are considered to have a firm mouthfeel without being mealy or mushy. Egg products from which the egg yolk has been eliminated have an undesirable gelatinous mouthfeel.

It has been found that an egg product low in cholesterol and having the texture associated with whole eggs may be prepared by replacing in a whole egg up to 90 % by weight of the egg yolk with a corresponding amount of egg white and adding a functionally effective amount of food gum. The term functionally effective amount relates to an amount of food gum resulting in an egg product that in scrambled form has a texture similar to that of scrambled fresh eggs. The invention accordingly provides an egg product low in cholesterol and in fat, having the texture associated with whole eggs, comprising egg white, egg yolk and a food gum having an egg yolk content which is lower than that present in whole eggs and a pH in the range of from 6.35 to 7.8. Preferably, in the egg product of the invention more than 60 % of the whole egg's egg yolk is replaced with egg white.

The term food gum as used herein relates to any nutritionally acceptable food gum, more particularly to such food gums which form a gel structure and interact with protein, preferably gums which form rigid gels resp. which are not disrupted by solids in the mix.

Preferred food gums include gellan[R] (an unapproved food additive developed by Kelco), agar, a carrageenan (in particular kappa carrageenan or iota carrageenan) and mixtures thereof with food gums selected from locust bean gum, microcrystalline cellulose (MCC) or methylcellulose.

Particularly preferred examples of such food gum mixtures include kappa carrageenan/locust bean gum, iota carrageenan/microcrystalline cellulose, and iota carrageenan/methylcellulose, especially at weight ratios in the range of from 4:1 to 1:1. Iota carrageenan, which forms a gel through formation of double helical structure aggregating with ions and polar moieties to form a supportive network, is most preferred.

The amount of food gum to be used will conveniently be selected such that it results in a scrambled egg product having a texture similar to that of scrambled fresh eggs, i.e. giving i.a. a firm mouthfeel and not being too viscose, too mealy, too rubbery, too firm, too slimy, too dry or too soft compared to scrambled egg products.

In general such texture will be attained with an amount of from 0.01 to 0.6 % especially of from 0.02 to 0.55 %, e.g. from 0.1 to 0.5 % by weight of food gum in the egg product of the invention.

The term egg yolk content as used herein is intended to express the weight ratio of egg yolk: total weight of egg white and egg yolk.

The egg product of the invention is conveniently a stable dispersion having a viscosity not exceeding 300 cps at room temperature (ca. 15 to 25° Centigrade) as determined with a Broofield Model LVT viscosimeter.

The egg product of the invention conveniently comprises egg white: egg yolk in a weight ratio within the range of from 32.3:1 to 7.8:1, particularly within the range of from 32.3:1 to 8.4:1, more particularly of from 32.3:1 to 10.1:1, preferably of from 32.3:1 to 12.3:1. Typical egg products of the invention comprise egg components (egg white and egg yolk) consisting for 85 to 97 % in particulary for 90 to 97 %, preferably from 92.5 to 97 % by weight of egg white.

The pH of the egg product of the invention is adjusted to pH in the range of 6.35 to 7.8 for texture control.

A pH of 7.0 to 7.8 will in general be preferred where the product is intended for a quick service use, e.g. the product is scrambled and consumed in a short time.

The pH will preferably be lower, e.g. between 6.35 and 6.5 if the product is intended for buffet use (i.e. the product is held on a steam table for some time, in general up to two hours) to prevent discoloration (greening) of the egg product.

The pH adjustment will preferably be accomplished by employing a physiologically acceptable carboxylic acid (a food acid) which is compatible with the egg product of the invention, such as citric acid, lactic acid and the like, preferably citric acid. The amount of food acid to be applied to attain the desired pH will in general constitute ca. 0.1 to 0.3 % by weight of the total egg product.

Adjusting the pH with acid reduces the gelatinous rubbery texture associated with high egg white product.

The egg product of the invention may in addition to egg white, egg yolk, food gum and, optionally, a carboxylic acid, comprise other ingredients.

Examples of such additional ingredients include water, physiologically acceptable food color, flavor and vegetable and/or animal proteins. Thus, for example, to improve the texture of the egg product of the invention vegetable or animal proteins such as non-fat dried milk, whey protein, sodium caseinate, soy concentrates, soy proteins, soy isolates and other legume protein sources, in particular non-fat dried milk may and preferably will be added. In general, the texture of the egg product is substantially improved when it comprises from ca. 0.5 to 1.0 % by weight of such protein.

Preferred egg products of the invention will consist for more than 95.0 %, particularly for more than 97 %, more particularly for more than 98.0 % by weight of egg white and egg yolk. The content of food color and food flavor will conveniently lie within the range of 0.005 to 0.03 % by weight each.

A typical egg formulation of this invention may for example contain the following ingredients:

| Ingredient | Percent by weight |
|---|---|
| Egg whites | 85 to 96 (e.g. 85.0 - 90.0) |
| Egg yolks | 3 to 11.5 (e.g. 8.6 - 8.8) |
| Vegetable or animal Proteins (e.g. non-fat dried milk) | 0.5 - 1.0 |
| Water | 0.0 - 1.0 |
| Food gum | 0.01 - 0.6 |
| Food acid for pH adjustment | 0.1 - 0.3 |
| Food Color (natural vegetable oil) | 0.005 - 0.03 |
| Food Flavors | 0.005 - 0.03 |

The egg product of the invention may be obtained by a process involving the steps, in arbitrary order, of

a) adjusting the pH of the egg components such that the pH of the final product is in the range of from 6.35 to 7.8

b) combining and mixing the ingredients and

c) optionally, pasteurizing the product of step a).

It will be appreciated that the process of the invention preferably involves a pasteurization step to eliminate pathogenic bacteria. Such pasteurization step may be carried out in a manner known per se for the pasteurization of egg white and egg yolk resp.

Because of the higher egg white content in the low fat/low cholesterol egg product of the invention it is extremely difficult to pasteurize these products. Egg white starts to coagulate at about 134° F (ca. 56.7°C). Whole eggs however can tolerate a temperature about 20°F (ca. 11.1° C) higher than egg white, because the iron in the egg yolk can stabilize the conalbumin (which is heat sensitive). It is possible to treat the egg white with metallic ions to stabilize conalbumin. This may be done in a manner known per se in the art, e.g. by treating egg white with aluminium ions employing for example lactic acid-aluminium sulfate. Thus, stabilised egg white permits pasteurization at 142° F (ca. 61.1° C).

However, egg white products so treated are not considered to be "all natural" products. It will accordingly be preferred to employ a pasteurization step which does not require the metallic ion stabilization of the egg white.

The pasteurization of the egg white is preferably carried out in the presence of $H_2O_2$. This allows an effective pasteurization at a temperature below the coagulation temperature (ca. 56.7° C) of the egg white. The $H_2O_2$ is conveniently employed in the form of the 35 technical mixture. USDA (US Department of Agriculture) approved conditions for $H_2O_2$ pasteurization of egg white involve heating egg white comprising 0.05 % by weight of $H_2O_2$ (pure) at a minimum of 125° F (ca 51.7° C) for a minimum of 3.5 minutes.

A preferred method for the preparation of the pasteurized egg product of the invention involves therefor separate pasteurization of the egg white and egg yolk. The pH adjustment of the egg white fraction is preferably accomplished after pasteurization (the natural pH of the egg white is more inducive to bacteria kill. For pasteurization, the egg white fraction may comprise food gum. The food gum may however also be added to the egg yolk fraction and then pasteurized. An advantageous production process comprises the steps of

1) pasteurizing liquid egg white, optionally in admixture with a food gum after addition of a minimum of 0.05 % by weight of $H_2O_2$ at a minimum temperature of 51.7° C for a minimum of 3.5 minutes;

2) adjusting the pH of the liquid egg yolk, where desired in the form of liquid whole egg and/or in admixture with the food gum and optional ingredients including proteins, color and flavor, to a pH in the range of from 6.35 to 7.8;

3) pasteurizing the mixture of step 2) at a minimum temperature of 61.1° C for a minimum of 3.5 minutes;

4) mixing the egg white blend of step 1 with the egg yolk blend of step 3, and adjusting the pH of the mixture to 6.35 to 7.8.

The $H_2O_2$ is conveniently added in an amount of from 0.05 to 0.1 % by weight, preferably 0.07 % to 0.08 % by weight.

The mixture of step 1) is preferably allowed to rest for a time sufficient to allow the $H_2O_2$ to fully decompose. Catalase may be used to accelerate the decomposition of the hydrogen peroxide.

The liquid egg yolk in step 2 is preferably employed in the form of liquid whole egg whereby the amount of liquid whole egg employed will preferably be selected such that the weight ratio egg white: egg yolk of the final product will lie within the range of from 32.3:1 to 7.8:1.

The pH of the liquid whole egg blend (Step 2) is preferably from 6.4 to 7.0.

The pH of the final product (Step 4) is preferably from about 6.4 to 7.4.

The process of the invention may be carried out as a batch process or a continuous process.

The following examples illustrate the selection of the preferred food gums and the preparation of the egg product of the invention.

### EXAMPLE 1 - Food gum evaluation

Various food gums are evaluated for their suitability in the reduced-yolk egg product, employing the following formula (Table I)

TABLE I

| Ingredient | Percent |
|---|---|
| Egg whites | 87.1665-89.0665 |
| Egg yolks | 8.8000 |
| Non-fat dry milk | 1.0000 |
| Water | 1.0000 |
| Color (Annatto) | 0.01200 |
| Food gum | 0.10000-2.0000 |
| Egg flavor blend | 0.021 |
| Citric Acid | 0.15 (pH adjusted 6.5-6.8) |

The procedure for evaluation of the gums is as follows. The batch ingredients (Table I) are calculated based on the egg whites as the limiting ingredient. The ingredients except the non-fat dry milk and food gum are combined and thoroughly mixed. Citric acid is used to adjust the mixture to ca. pH 6.6. Aliquots of the base are combined with a dry blend of the gum selected and the non-fat dry milk. After time for hydration, the viscosity of the egg mix is measured. The mix is then cooked (scrambled) and evaluated for texture and mouthfeel.

Examples of food gums evaluated according to this Example 1 include agar, alginate, Gellan[R], kappa carrageenan, iota carrageenan (both in gelling form as FMC Gelcarin[R], and in non-gelling form, as FMC Viscarin[R]), MCC, methylcellulose, kappa carrageenan/locust bean gum (1:1), (gelling) iota carrageenan/MCC (4:1) and (gelling) iota carrageenan/methylcellulose (1:1).

The results indicate that the following food gums are particularly appropriate for use in the egg product of the invention:

Gellan[R] (an unapproved food additive developed by Kelco), agar, kappa carrageenan, iota carrageenan and mixtures thereof with food gums selected from locust bean gum, microcrystalline cellulose (MCC) or methylcelllulose, more preferably kappa carrageenan or iota carrageenan or mixtures of such carrageenans with locust bean gum, MCC or methylcellulose.

Particularly preferred food gum mixtures include kappa carrageenan/locust bean gum (1:1), iota carrageenan/microcrystalline cellulose (4:1), and iota carrageenan/methylcellulose (1:1).

In general, the test people preferred the egg products comprising iota carrageenan, in non-gelling or gelling form, particularly the latter for its favorable texture and mouthfeel.

The best results are obtained with egg products comprising less than 0.6 % by weight of food gum.

### EXAMPLE 2

Analogous tests are run with compositions of the invention comprising up to 95.5 % by weight of egg white and from 0.01 to 0.6 % by weight of food gum. Particularly good results are again obtained with the gum systems stated in Example 1.

In the following Examples 3 to 5 the following equipment was used: Double Votex High Sheet Blender (Breddo Company) with 5000 lbs capacity. Bottom of the blender has two sets of chopping blades.

Pasteurizer: Standard commercial plate heat exchanger.

Holding Tubes: Standard commercial 2 1/2″ stainless steel holding tubes arranged in such a way that there is 1/4″ rise for every foot to ensure a laminar flow (according to the Egg Pasteurization Manual published by USDA).

Static Mixer: 2 1/2″ pipe with a helix inside the pipe (Cleveland Static Mixing System, Bedford N.H.).

Metering Pumps (Bran & Lubbe).

### EXAMPLE 3 - Batch Process

Step 1 - 3,463 lbs of liquid egg white with 11 % solids are pumped into the blender. A citric acid solution is added to bring the pH down to 7.45. 13.5 lbs of carrageenan is added to the blender and blended for 2 minutes. The mixture is then pasteurized at 128° F for $3\frac{1}{2}$ minutes with $H_2O_2$ injected into the holding tube to an end concentration of 0.05 % $H_2O_2$. The pasteurized egg white blend is pumped to a holding tank and held overnight to allow the $H_2O_2$ to completely decompose and the foam to dissipate.

Step 2 - 1,467 lbs whole egg with 23.5 solids are pumped into the blender. A citric acid solution is added to bring the pH down to 6.65. 50 lbs of non-fat dried milk, 0.8 lbs of annato color, and 1 lb natural flavor are added to the blender and blended for 3 minutes. The whole egg blend is then pasteurized at a minimum of 142° F for $3\frac{1}{2}$ minutes.

Step 3 - The pasteurized egg white blend from Step 1 and the pasteurized whole egg blend from Step 2 are pumped into a mixing tank and mixed for 30 minutes before being pumped to a filling machine for packaging. The final product pH is 7.1.

### EXAMPLE 4 - Continuous Process

Step 1 - The teaching of Example 3, Step 1 is followed.

Step 2 - The teaching of Example 3, Step 2 is followed.

Step 3 - The pasteurized egg white blend from Step 1 and the pasteurized whole egg blend from step 2 are blended by continuously mixing the ingredients at a ratio of 2.3 to 9.0 parts of egg white blend to 1 part of whole egg blend in a static mixer.

### EXAMPLE 5 - Batch or continuous process

The teachings of Example 3, Steps 1, 2 and 3 are followed except that approximately 3oz of catalase is added in Step 1 to expedite decomposition of the $H_2O_2$ and the holding time is shortened. In Step 2 before pasteurization the mix may be homogenized at 1000 to 1500 psi total pressure.

Optionally, in Step 3 the teaching of Example 4 are followed for continuous processing.

While the invention has been described with Step 2 using whole egg blend, it is equally applicable to an egg yolk blend in Step 2, provided the total egg white to egg yolk ratio of the final products is approximately in the range of from 32.3:1 to 10.1:1.

### EXAMPLE 6 - Liquid Egg White / Liquid Whole Egg

#### - Batch process

Step 1 - 4,420 lbs of liquid egg white (11 % solids) is pumped into a blender and 13.5 lbs of iota carrageenan is added and blended for 2 minutes (carrageenan can be added to Step 2 if preferred). This mixture is pasteurized at 128° F for $3\frac{1}{2}$ minutes with $H_2O_2$ injected into the holding tube up to an end concentration of 0.05 % $H_2O_2$. The pasteurized egg white blend is pumped to a holding tank and held until $H_2O_2$ is completely decomposed.

Step 2 - 515 lbs of liquid whole egg (23.5 % solids) is pumped into the blender and a 50 % citric acid solution, at room temperature, is added to adjust the pH to 6.65. 50 lbs of non-fat dry milk, 0.8 lbs of annato color and 1 lb of natural flavor are added and blended for 3 minutes. The whole egg blend is then pasteurized at 143° F for $3\frac{1}{2}$ minutes.

Step 3 - The egg white blend from Step 1 and the whole egg blend from Step 2 are pumped into a mixing tank and additional citric acid is added to bring the pH to 7.3.

### EXAMPLE 7 - Liquid Egg White and Liquid Egg Yolk

Step 1 - Same as Example 6

Step 2 - 150 lbs of liquid egg yolk (approximately 50 % solids) and 365 lbs of liquid egg whites (11 % solids) are pumped into a blender and a 50 % citric acid solution is added to adjust the pH to 6.65. The rest is the same as Step 2 of Example 6.

Step 3 - Same as Example 6.

### EXAMPLE 8 - Continuous Process

Step 1 - Same as Example 6

Step 2 - Same as Example 6

Step 3 - The pasteurized egg white blend from Step 1 and the pasteurized whole egg blend from Step 2 are pumped with metering pumps at 7.8 to 1 ratio and mixed through a static mixer to a holding tank or to a filling machine directly. At the same time citric acid solution is added to adjust pH to 7.3.

### EXAMPLE 9 - Composition and Preparation of Citric Acid Solution

| | |
|---|---|
| Citric Acid | 100 lbs |
| Water | 100 lbs |
| Total | 200 lbs |

100 lbs of citric acid is added to 100 lbs of water and heated in a steam jacketed kettle with cover to boiling. The solution is allowed to cool down to room temperature before use. It will be appreciated that the amount of citric acid solution needed depends on the pH of the liquid egg employed as starting material.

## EXAMPLE 10 - Formula Example

| Liquid Egg White (11 % solids) | 4430 | lbs |
|---|---|---|
| Liquid Whole Egg (23.5 % solids) | 515 | lbs |
| Non-Fat Dry Milk | 50 | lbs |
| Carrageenan (iota) | 13.5 | lbs |
| Citric acid | 6 | lbs |
| Food Color (annato) | 0.8 | lbs |
| Natural Flavor | 1 | lb |
| Total | 5022.3 | lbs |

## Claims

1. An egg product low in cholesterol, having the texture associated with whole eggs, comprising egg white, egg yolk and a food gum, having an egg yolk content which is lower than that present in whole eggs and a pH in the range of from 6.35 to 7.8.

2. The egg product of Claim 1, having an egg yolk content which corresponds with that present in whole eggs wherein up to 90 % by weight of the egg yolk has been replaced by a corresponding amount of egg white.

3. The egg product of Claim 1 or 2, comprising from 0.01 to 0.6 %, especially from 0.02 to 0.55 %, particularly from 0.1 to 0.5 % by weight of food gum relative to the total weight of the egg product.

4. The egg product of Claims 1 to 3, comprising a weight ratio of egg white: egg yolk in the range of from 32.3:1 to 7.8:1, particularly of from 32.3:1 to 8.4:1, more particularly of from 32.3:1 to 10.1:1, preferably of from 32.3:1 to 12.3:1.

5. The egg product of Claims 1 to 4, wherein the pH adjustment is achieved with a physiologically acceptable carboxylic acid.

6. The egg product of Claim 5, comprising additionally one or more of the ingredients selected from water, food color, flavor, vegetable proteins and animal proteins.

7. The egg product of Claim 6, comprising more than 95.0 %, in particular more than 97.0 %, more particularly more than 98.0 % by weight of egg white and egg yolk.

8. The egg product of Claim 7, comprising by weight: egg whites from about 85.0 to 96.0 %, egg yolks from about 3.0 to 11.5 %, vegetable or animal proteins from about 0.5 to 1.0 %, water from about 0.0 to 1.0 %, food gum from about 0.01 to 0.6%, carboxylic acid from about 0.1 to 0.3 %, food color from about 0.005 to 0.03 %, egg flavor from about 0.005 to 0.03 %.

9. The egg product of Claims 1 to 8 wherein the food gums are selected from Gellan[R], agar, kappa carrageenan, iota carrageenan and mixtures thereof with food gums selected from locust bean gum, microcrystalline cellulose and methylcellulose.

10. The egg product of Claim 9 wherein the food gum is selected from the group consisting of agar, iota carrageenan and kappa carrageenan and mixtures thereof with food gums selected from locust bean gum, microcrystalline cellulose and methylcellulose.

11. The egg product of Claim 10, wherein the food gum is iota carrageenan.

12. The reduced-yolk egg product of Claims 1 to 11 wherein the carboxylic acid is citric acid.

13. Process of preparing the egg product of Claims 1 to 12 involving the steps in arbitrary order, of

a) adjusting the pH of the egg components such that the pH of the final product is in the range of from 6.35 to 7.8;

b) combining and mixing the ingredients; and

c) optionally, pasteurizing the ingredients or mixtures thereof.

14. The process of Claim 13, comprising a separate pasteurization of the egg white and the egg yolk fraction.

15. The process of Claim 14 comprising pasteurizing the egg white in the presence of $H_2O_2$.

16. The process of Claim 15, comprising:

i) pasteurizing liquid egg white, optionally in admixture with a food gum, after the addition of a minimum of 0.05 % by weight of $H_2O_2$ at a minimum temperature of 51.7°C for a minimum of 3.5 minutes;

ii) adjusting the pH of the liquid egg yolk, where desired in the form of liquid whole egg and/or in admixture with the food gum and one or more of the optional ingredients including proteins, color and flavor, to a pH in the range of from 6.35 to 7.8;

iii) pasteurizing the mixture of step ii) at a minimum temperature of 61.1°C for a minimum of 3.5 minutes; and

iv) mixing the egg white blend of step i) with the egg yolk blend of step iii).

17. The process according to Claim 16, wherein in step ii) the egg yolk is introduced in the form of liquid whole egg.

18. The process according to Claim 17, wherein in step iv) the ingredients of steps i) and iii) are continuously mixed at a ratio of about 2.3 to 9.0 parts of egg white blend to 1 part of whole egg blend.

19. The process according to Claims 16 to 18 wherein in step i) catalase is added to expedite decomposition of $H_2O_2$.

20. The process according to Claims 16 to 19, wherein in step ii) the mixture is homogenized at 1000 to 1500 psi prior to pasteurization.

21. The egg product of Claims 1 to 13 having a viscosity not exceeding 300 cps at room temperature.